# EUROPEAN PATENT APPLICATION

(11) **EP 4 474 111 A1**
(43) Date of publication of application: **11.12.2024**
(21) Application number: 23386044.4
(22) Date of filing: 08.06.2023
(51) Int. Cl.: B25J 9/04, B65G 61/00, B25J 18/02, B25J 19/02

(54) **PALLETISATION/DE-PALLETISATION PICKING DEVICE**

(71) Applicant: Ocado Innovation Limited, Hatfield, Hertfordshire AL10 9UL (GB)
(72) Inventor: CHATZAKOS, Panagiotis, Hatfield, Hertfordshire AL10 9UL (GB)
(74) Representative: Ocado Group IP Department

(57) **Abstract**

A mechanically simple picking device is disclosed. The picking device can be used for a palletisation and/or a de-palletisation process.

## Description

### Technical Field

The present invention relates to a picking device for picking items from and/or placing items on a given location, such as a pallet and/or a conveyor belt. The invention may be used to automatically carry out a palletisation and/or de-palletisation process.

### Background

Items destined for storage in a warehouse typically arrive in pallets. The pallets may contain several similar items (e.g. packs of soft drink cans from the same manufacturer, where the packs are the same size/volume) and/or different items (e.g. packs of beverages from different manufacturers, where the packs are different sizes/volumes). The items on the pallet have to be removed for storage within the warehouse. This process is known as de-palletisation, where the items are removed, typically on a one-by-one layer-by-layer basis, from the pallet. That is, each item from a top layer of items on the pallet is removed before proceeding to removing items from the next layer (which then becomes the current top layer). As the items are removed, they may be placed in a given location, such as a conveyor belt to transfer the items for storage in the warehouse.

Similarly, items destined to leave a warehouse may leave on pallets, which requires the similar or different items to be placed on the pallet. This process is known as palletisation, where the items are placed, typically on a one-by-one layer-by-layer basis, on the pallet. That is, each item is placed to form a current top layer of items on the pallet before proceeding to placing items on the next layer (which then becomes the current top layer). The items that are to be placed, may arrive from a given location, such as a conveyor belt, to transfer the items from storage in the warehouse. Instead of pallets, roll cages, also known as roller containers, may be used as outbound carriers, but the principle remains the same.

Both palletisation and de-palletisation processes are open to automation using industrial robots, such as automated robotic arms that pick and move items. Traditionally, this has been done using a somewhat complex robotic arm with multiple links, where each link has multiple degrees of freedom. Whilst such complex robotic arms can carry out palletisation and de-palletisation with the required speed and precision, there is a need for a simple picking device that can be automated to carry out certain tasks, such as palletisation and de-palletisation, with the required speed and precision. There is also a need for a simple picking device that can form part of an automated system for moving items from a pallet to storage in a warehouse and/or from storage in a warehouse to a pallet.

### Summary

In a first aspect, there is a picking device for moving items, the picking device comprising:
a vertical member comprising a first end and a second end, wherein the first end is configured to fix to a surface;
a horizontal member;
a gripping mechanism fixed on the horizontal member, wherein the gripping mechanism is configured to move along a vertical axis to grip and/or place an item; and
wherein the horizontal member is engaged with the second end of the vertical member such that:
   the horizontal member moves along a horizontal axis to vary a horizontal distance between the gripping mechanism and the vertical member; and
   the horizontal member rotates in a horizontal plane about the vertical axis. This means that the movement of the gripping device is mechanically simple but can still move along the full length of the radius and rotate up to a 360° angle about the vertical member. Further, the gripping device can interact with an item at any height along the vertical axis.

The gripping device and/or the vertical member may extend and/or retract along the vertical axis to move the gripping mechanism along the vertical axis to grip and/or place an item. This increases the range of motion that the picking arm can perform, which can reduce the time taken for a given gripping and/or placing operation.

The horizontal member may be confined to movement along a horizontal plane. This reduces the complexity of the picking device.

The picking device may comprise a mounting mechanism to engage the horizontal member with the second end of the vertical member, and a first push-pull mechanism configured to act about the mounting mechanism to move the horizontal member along the horizontal axis. The first push-pull mechanism may comprise a rack and pinion, or a push-pull chain actuator, or a linear actuator. The horizontal member may be slidably engaged with the mounting mechanism. The mounting mechanism may comprise a swivel to effect rotation of the horizontal member about the vertical axis. This allows accurate movement of the horizontal member.

The gripping mechanism may comprise an extending/retracting arm, such as a telescopic mechanism, configured to extend/retract along the vertical axis, and an end-effector at a distal end of the extending arm, wherein the end-effector is configured to releasably grip an item. The end-effector may be rotationally coupled with the extending/retracting arm to assist with alignment with an item to be gripped and/or placed. This allows quick and accurate access to an item and/or location.

The picking device may comprise a second push-pull mechanism configured to act about the horizontal member to extend/retract the extending/retracting arm along the vertical axis. The second push-pull mechanism may comprise a rack and pinion, or a push-pull chain actuator, or a linear actuator. This allows accurate movement of the extending/retracting arm.

The end-effector may also comprise a rigid outer structure configured to at least partially surround an item and an inner member configured to generate a force between the rigid outer structure and the item such that the object can be gripped by the end effector, or suction cups, or jaws. This means the end-effector can secure an item.

In a second aspect there is a system comprising:
the picking device according to any preceding claim;
an elevator device configured to raise a pallet for storing a plurality of items; and a controller configured to:
   raise/lower the elevator device such that a top layer of items on the pallet approximately aligns with a level of a destination or origin location;
   use the picking device to either grip and remove an item from the top layer of the items on the pallet, or place an item on the top layer of the pallet; and
   use the picking device to either place the item that has been removed in the destination location, or obtain another item from the origin location for placement adjacent the item that was placed. This reduces the time taken to remove and/or place an item.

The controller may be configured to either iteratively remove or place items as part of a respective palletisation or de-palletisation process, wherein the items are removed or placed on an item-by-item layer-by-layer process. This means the time taken for a palletisation and/or a de-palletisation process is reduced.

The system may further comprise a vision system, wherein the vision system is configured to determine the location from which an item is to be removed or placed, and wherein the controller is further configured to control the movements of the picking device and elevator device to minimise the time taken to remove the item or place the item, and optionally wherein the location comprises a conveyor, and the controller is further configured to control the conveyor for receiving items that have been removed and/or presenting items to be placed. This helps fully automate and reduce the time taken for a palletisation and/or a de-palletisation process.

In a third aspect, there is a method for de-palletising and/or palletising using the second aspect, wherein the method comprises:
using the controller to:
a) raise/lower the elevator device such that the top layer of items on the pallet approximately aligns with the level of a destination or origin location;
b) use the picking device to either grip and remove an item from the top layer of the items on the pallet, or place an item on the top layer of the pallet;
c) use the picking device to either place the item that has been removed in the destination location, or obtain another item from the origin location for placement adjacent the item that was placed; and
d) iteratively carry out steps a) to c) to remove or place items as part of a respective palletisation or de-palletisation process, wherein the items are removed or placed on a one-by-one layer-by-layer basis.

In a fourth aspect, there is a computer program comprising instructions which, when the program is executed by a computer, cause the computer to carry out the method of the third aspect.

### Brief Description of Drawings

The present invention is described with reference to one or more exemplary embodiments as depicted in the accompanying drawings, wherein:
Figure 1 shows a picking device according to the invention;
Figure 2 shows a schematic according to the invention;
Figures 3a and 3b show an end-effector according to the invention;
Figure 4 shows a system for controlling a palletisation and/or a de-palletisation process according to the invention;
Figure 5 shows a method of system for controlling a palletisation and/or a de-palletisation process; and
Figure 6 shows a palletisation and/or a de-palletisation system according to the invention.

### Detailed Description

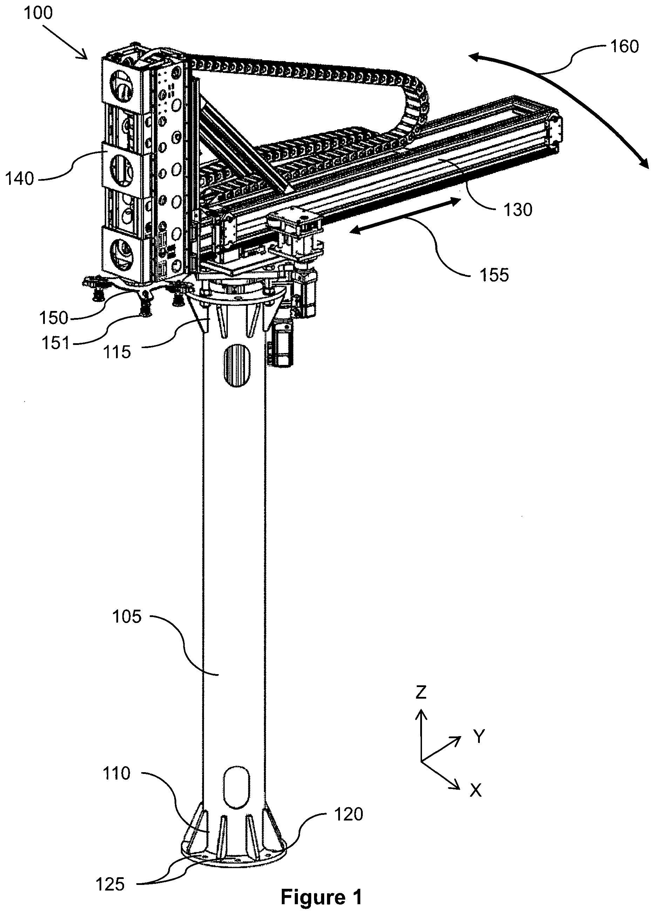

Figure 1 shows a picking device 100 according to the invention. The picking device comprises a vertical member 105 with a first end 110 and second end 115. The first end is configured to fix to a surface, such as a floor of a warehouse. It will be appreciated that the first end can fix to a surface in a number of ways, and for example, via a mounting plate 120 and bolts 125. The picking device also has a horizontal member (or boom or arm) 130 to which a gripping mechanism 140 is fixed (this includes releasably fixed such that its position on the horizontal member can be varied). The gripping device may include an end effector 150 to grip items using suction cups 151. The horizontal member is engaged (as explained below) with the second end such that the horizontal member is capable of: movement along a horizontal axis 155 to vary a horizontal distance between the gripping mechanism and the vertical member; and rotation 160 in a horizontal plane about the vertical member. This means that, when considering the XY-plane, the gripping device can vary both its radius and angle with respect to the vertical member. Therefore, the gripping device can move along the full length of the radius and rotate up to a 360° angle about the vertical member.

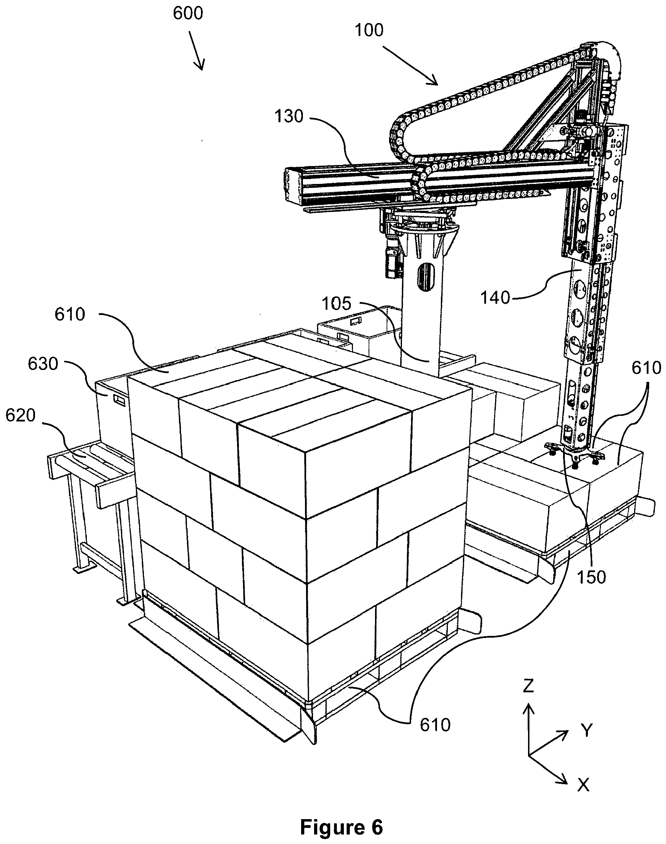

The gripping device, as best shown in Figure 6, may have an extending/retracting arm, such as a telescopic mechanism, so that the end effector can be raised and/or lowered to grip and/or release an item at different heights. In this scenario, the vertical member has a fixed height. Additionally and/or alternatively, it will be appreciated that the vertical member can also have a height varying mechanism, such as a telescopic mechanism, that can act in tandem with the telescopic mechanism of the gripping device to move the end effector to a desired height. Alternatively, the gripping device may be of a fixed length and the variance in end-effector height is achieved by the height varying mechanism, such as a telescopic mechanism, of the vertical member.

When referring to a vertical member, a vertical member has a longitudinal axis along a vertical direction (i.e. along the Z-axis). When referring to a horizontal member, a horizontal member has a longitudinal axis along a horizontal direction (i.e. along the X-axis or Y-axis, or XY-plane), such that the horizontal member is perpendicular to the vertical member. In Figure 1, the vertical member has a longitudinal axis along the Z-axis, and the horizontal member has a longitudinal axis along the XY-plane. In general the terms vertical and horizontal members denote the relative, perpendicular, orientation of their respective longitudinal axes. When referring to planes, a first plane differs from a second plane through orientation of the first plane with respect to the second plane. A plane offset vertically or horizontally from and parallel to a plane is considered to be the same plane as the plane from which it is offset.

In this context, it can be appreciated that the movement that the horizontal member movement can effect in and of itself is constrained to the horizontal plane only. Put another way, when varying the distance between the gripping device and the vertical member, this is due to movement in the horizontal plane only.

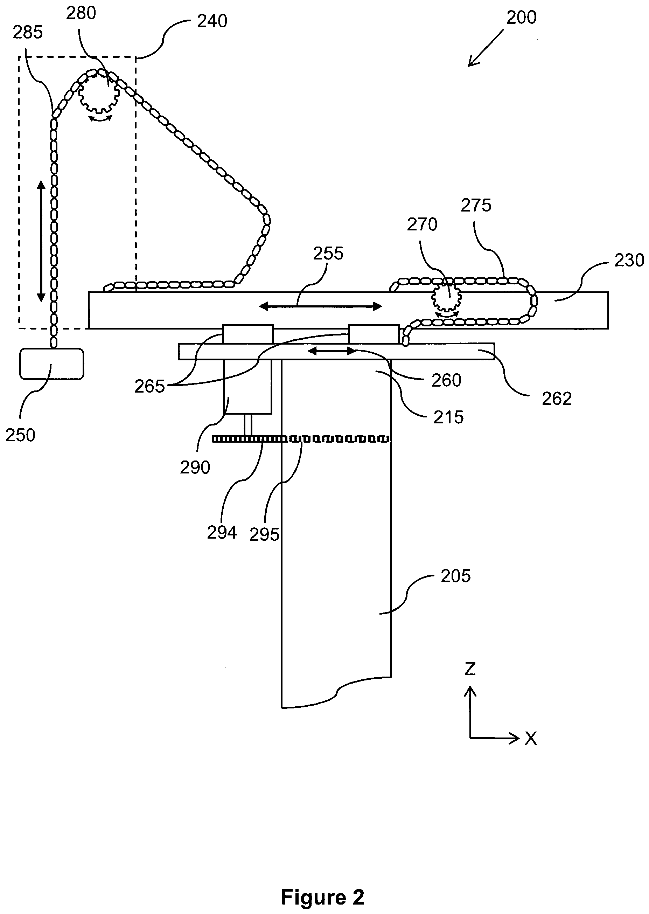

With reference to Figure 2, a schematic 200 helps illustrate operation of the invention. The schematic depicts elements also shown in Figure 1: vertical member 205; second end 215 of the vertical member; horizontal member 230; gripping device 240 (which can include a an extending/retracting arm, such as a telescopic mechanism, to which an end-effector is attached); end-effector 250; horizontal axis 255; and rotation 260 in a horizontal plane.

The horizontal member is rotationally engaged, via a swivel or bearings for example, with a mounting mechanism 262, such as a mounting plate. The mounting mechanism can rotate about the vertical member. In one implementation, a motor 290 is fixed to the mounting mechanism 262, and drives a first gear 294 that meshes with a second gear 295 fixed to the vertical member. This way, the motor and mounting mechanism (and thus the horizontal member) rotate about the vertical member. It will be appreciated that the motor can instead be located within the vertical member and a rotor of the motor can rotate the mounting mechanism.

The mounting mechanism has a sliding mechanism 265, such as guide rails, or wheels, or drawer runners, to allow the horizontal member to move horizontally. A first push-pull mechanism 270, 275 is used to effect the horizontal movement. An encoder may be used to track the movement of the first push-pull mechanism, and thus the movement of the horizontal member. The first push-pull mechanism shown is a first push-pull chain. As shown, a first end of the first push-pull chain is connected to the mounting plate, and a second end of the first push-pull chain is connected to the horizontal member. When gear 270 is driven by a motor (not shown), it can effect movement 255 along a horizontal axis/plane. It will be appreciated that alternative push-pull mechanisms can be used such as a rack and pinion, or a linear actuator. In principle, any type of push-pull mechanism can be used as long as it allows the horizontal member to move with respect to the mounting mechanism. That is, the first push-pull mechanism has a first end attached to the mounting mechanism and a second end attached to the horizontal member.

The raising and/or lowering of the end-effector works on a similar principle. A second push-pull mechanism 280, 285 is used to raise and/or lower the end-effector 250. An encoder may be used to track the movement of the second push-pull mechanism, and thus the movement of the end-effector. The second push-pull mechanism shown is a second push-pull chain. As shown, a first end of the second push-pull chain is connected to the horizontal member, and a second end of the second push-pull chain is connected to the end-effector. When gear 280 is driven by a motor (not shown), it can effect movement of the end-effector along the vertical axis/plane. It will be appreciated that alternative push-pull mechanisms can be used such as a rack and pinion, or a linear actuator. In principle, any type of push-pull mechanism can be used as long as it allows the end-effector to move with respect to the mounting mechanism. That is, the second push-pull mechanism has a first end attached to the end-effector and a second end attached to the horizontal member.

As mentioned above, and best shown in Figure 6, the gripping device may comprise an extending/retracting arm, such as a telescopic mechanism, to which the end effector is attached. When the second push-pull mechanism is used to raise and/or lower the end-effector, this automatically retracts and/or extends the extending/retracting arm. Alternatively, the push-pull mechanism may be attached to a distal portion of the extending/retracting arm. Given the end-effector is attached to the extending/retracting arm, movement of the push-pull chain will move the end-effector. It will also be appreciated that the end-effector may be rotatably coupled to the extending/retracting arm to assist with alignment when gripping and/or placing an item. The end-effector may be rotatably coupled by a wrist action mechanism (or wrist assembly) for example that uses couplings and pivots to effect wrist-like movement. Such a wrist action mechanism can be driven by a motor (not shown).

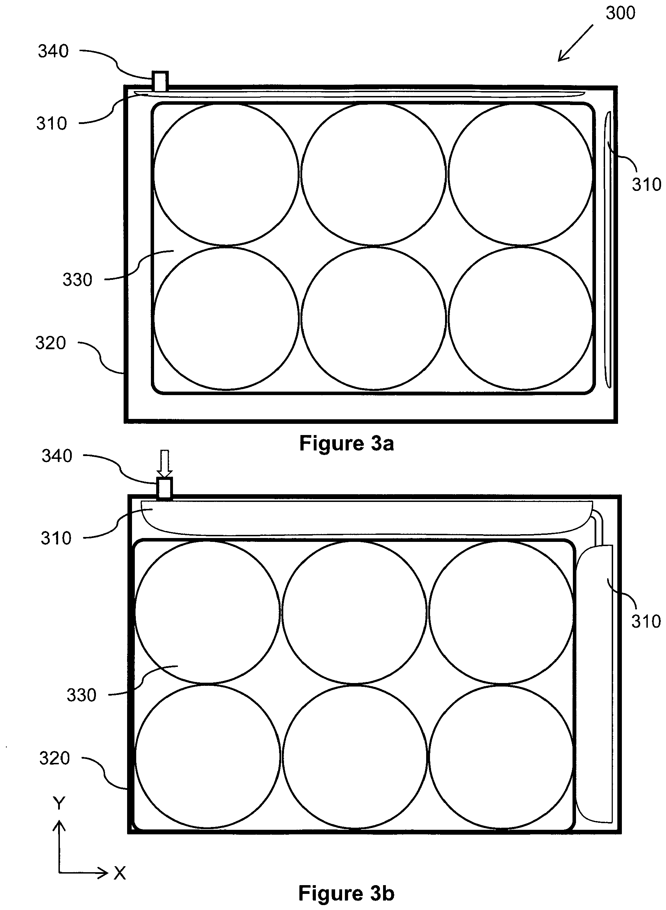

The end effector 150, 250 can take any appropriate form. As shown in Figure 1, suction cups 151 may be used. Alternatively, gripper jaws may be used. Alternatively, an end-effector (or manipulator) of the type disclosed in EP3868518A ("Ocado Innovation Limited") and shown in Figure 3 can be used. As shown in Figures 3a and 3b, the end-effector 300 has an inner member 310, such as inflatable air bags, that can be configured to generate a force between a rigid outer structure 320 and the item 330 (in this example, a package containing six items) such that the item can be gripped by the end-effector. That is, the end-effector is placed over the item to be grabbed, and the inner member changes its state (e.g. in this example, is inflated via port 340) to grip the item between the inner member and rigid outer surface. In principle, several different types of commonly used end effectors may be employed, such as suction devices, clamping devices, electrostatic adhesion devices or combinations thereof.

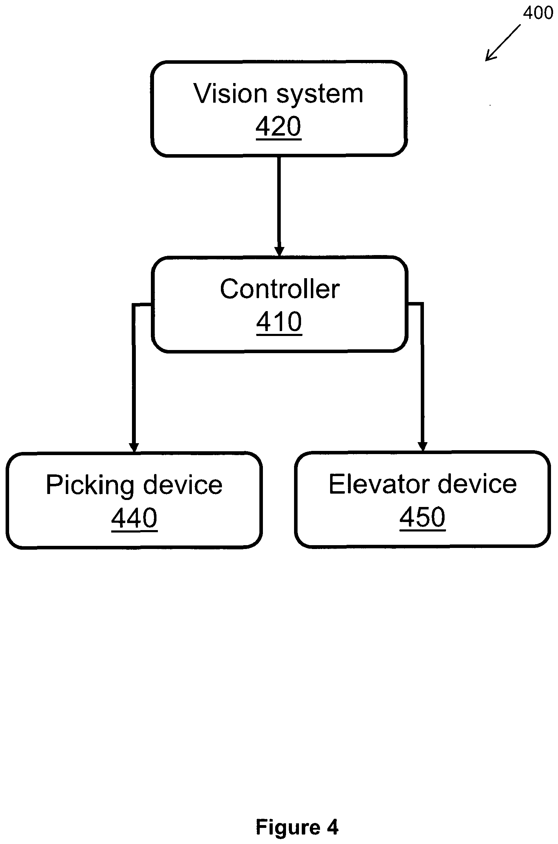

With reference to Figures 4 to 6, the picking device may be used as part of an automated system, such as one that automates palletisation and/or de-palletisation.

As part of such a system, and with reference to Figure 4, a controller (or processor) 410 interacts with a vison system 420, picking device 440, and an optional elevator device 450, that can carry a pallet or roll cage for example. The processor coordinates the activities between the vison system 420, picking device 440, and elevator device 450 to automate palletisation and/or de-palletisation. The picking device can be that described above with reference to Figures 1 and 2. The vision system can be an overhead camera combined with appropriate image processing techniques. The vision system may be used to identify the next item with which the picking device interacts, and monitor the movements of the picking device as it interacts with the next item. This can be used as a feedback loop to control the movements of the picking arm. For example, the vision system may be used to select the next most accessible item, such as a corner item, in a layer of items, and control the picking arm accordingly. The pallet elevator device may be used to support the items with which the picking device interacts, either directly or indirectly via a pallet. The elevator device may take the form of a scissor lift for example. In general, the elevator device is configured to move the items it supports closer to the end-effector of the picking system to reduce the number of movements (and thus time) required to remove and/or place a number of items. The vision system is capable of detecting the height of the items stored on the elevator device, so a height sensor on the elevator device itself is not required.

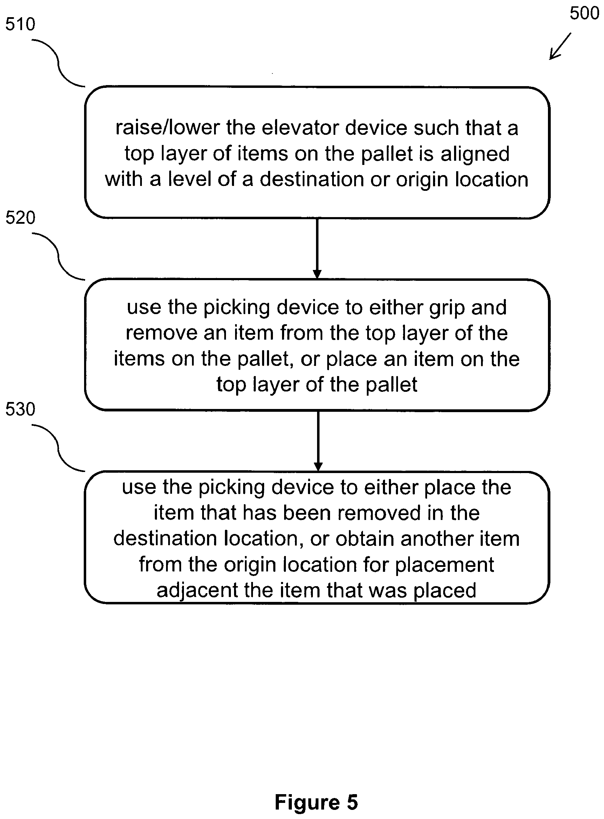

With reference to Figure 5, the vision system, which can be an overhead camera, can as an initiation step, as part of a de-palletisation process, identify a top layer of items on the pallet. Assuming the top layer is of a height that requires the gripping device and/or vertical member to fully extend to engage therewith, the elevator device can be used to raise the pallet to a height that minimises the extension required by the gripping device and/or vertical member. Similarly, as part of a palletisation process, the first layer on the pallet will be closest to ground level and require a full extension of the gripping device and/or vertical member to engage therewith. The elevator device can be used to raise the pallet to a height that minimises the extension required by the gripping device and/or vertical member. In either case, as the pallets are de-palletised or palletised, the height of the elevator device can be adjusted accordingly. For example, once a first layer is complete on a pallet during palletisation, the pallet can be lowered to accommodate placement on the next layer that goes on top of the first layer. It can be advantageous to set the height of the elevator device so that the top layer of the items is approximately at the level of the destination or origin location, which may be a conveyor belt for example. This minimises the vertical movement required by the gripping device during palletlisation and/or de-palletlisation. In other words, the majority of movements of the picking arm are in the horizontal plane. It can be appreciated that the vision system can constantly analyse the environment to control the movements of the elevator device and picking arm to reduce the overall movement time required.

Having completed this initialisation step, the method 500 can be carried out by the controller 410. In step 510, the elevator device 450 may be moved to approximately align the top layer of items with the level of a destination or origin location. In step 520, the picking device is configured to either grip and remove an item from the top layer of the items on the pallet (i.e. as part of a de-palletisation process), or place an item on the top layer of the pallet (i.e. as part of a palletisation process). In step 530, depending on the respective process being carried out in step 520, the picking device is used either to place the item that has been removed in step 520 in the destination location, or obtain another item from the origin location for placement adjacent the item that was placed in step 520. The process 500 (and initialisation step) is iterated on an item-by-item layer-by-layer process until the respective de-palletisation and palletisation processes have been completed.

As shown in Figure 6, the system 600 uses the picking device's 100 ability to vary the distance between the gripping device 140 and the vertical member to obtain and/or place items 610 at different distances (i.e. radii) from the vertical member in a rapid and accurate manner. Further, although the elevator device 450 is not shown in Figure 6, it can be appreciated how raising the pallet 610 on which the current item being engaged by the end-effector 150 is located, would reduce the extension required by the gripping device 140, especially if the pallet height is aligned with the destination or origin location. The vision system (not shown) is located above the system to determine the movements required by the picking device to minimise the time taken to interact with the desired item 610. The items that are to be palletised can be obtained from totes/containers 630 that are automatically presented via conveyer 620 (i.e. an origin location). Similarly, items that are to be de-palletised can be placed in totes/containers 630 (i.e. a destination location). The conveyor can transport the totes/containers 630 to a warehouse. The controller can therefore co-ordinate the movement of the conveyor and use the vision system to assist with placement and/or removal of the items in and from the totes/containers.

In this document, the language "movement in the n-direction" (and related wording), where n is one of x, y and z, is intended to mean movement substantially along or parallel to the n-axis, in either direction (i.e. towards the positive end of the n-axis or towards the negative end of the n-axis).

In this document, the word "connect" and its derivatives are intended to include the possibilities of direct and indirection connection. For example, "x is connected to y" is intended to include the possibility that x is directly connected to y, with no intervening components, and the possibility that x is indirectly connected to y, with one or more intervening components. Where a direct connection is intended, the words "directly connected", "direct connection" or similar will be used. Similarly, the word "support" and its derivatives are intended to include the possibilities of direct and indirect contact. For example, "x supports y" is intended to include the possibility that x directly supports and directly contacts y, with no intervening components, and the possibility that x indirectly supports y, with one or more intervening components contacting x and/or y. The word "mount" and its derivatives are intended to include the possibility of direct and indirect mounting. For example, "x is mounted on y" is intended to include the possibility that x is directly mounted on y, with no intervening components, and the possibility that x is indirectly mounted on y, with one or more intervening components.

In this document, the word "comprise" and its derivatives are intended to have an inclusive rather than an exclusive meaning. For example, "x comprises y" is intended to include the possibilities that x includes one and only one y, multiple y's, or one or more y's and one or more other elements. Where an exclusive meaning is intended, the language "x is composed of y" will be used, meaning that x includes only y and nothing else.

In this document, "controller" is intended to include any hardware which is suitable for controlling (e.g. providing instructions to) one or more other components. For example, a processor equipped with one or more memories and appropriate software to process data relating to a component or components and send appropriate instructions to the component(s) to enable the component(s) to perform its/their intended function(s).

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of methods according to various embodiments of the present invention. In this regard, each block in the flow diagram may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be performed substantially concurrently, or the blocks may sometimes be performed in the reverse order, depending upon the functionality involved. It will also be noted that each block of the flow diagrams, and combinations of blocks in the flow diagrams, can be implemented by special purpose hardware-based systems that perform the specified functions or acts, or combinations of special purpose hardware and computer instructions.

It will be understood that the above description is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A picking device for moving items, the picking device comprising:
a vertical member comprising a first end and a second end, wherein the first end is configured to fix to a surface;
a horizontal member;
a gripping mechanism fixed on the horizontal member, wherein the gripping mechanism is configured to move along a vertical axis to grip and/or place an item; and
wherein the horizontal member is engaged with the second end of the vertical member such that:
the horizontal member moves along a horizontal axis to vary a horizontal distance between the gripping mechanism and the vertical member; and
the horizontal member rotates in a horizontal plane about the vertical axis.

2. The picking device of claim 1, wherein:
the gripping device and/or the vertical member extends and/or retracts along the vertical axis to move the gripping mechanism along the vertical axis to grip and/or place an item; and/or
the horizontal member is confined to movement along a horizontal plane.

3. The picking device of claims 1 or 2, further comprising:
a mounting mechanism to engage the horizontal member with the second end of the vertical member; and
a first push-pull mechanism configured to act about the mounting mechanism to move the horizontal member along the horizontal axis.

4. The picking device of claim 3, wherein the first push-pull mechanism comprises:
a rack and pinion;
a push-pull chain actuator; or
a linear actuator.

5. The picking device of claims 3 or 4, wherein the horizontal member is slidably engaged with the mounting mechanism.

6. The picking device according to claims 3 to 5, wherein the mounting mechanism comprises a swivel to effect rotation of the horizontal member about the vertical axis.

7. The picking device according to any preceding claim, wherein the gripping mechanism further comprises:
an extending/retracting arm, such as a telescopic mechanism, configured to extend/retract along the vertical axis; and
an end-effector at a distal end of the extending arm, wherein the end-effector is configured to releasably grip an item, and optionally wherein the end-effector is rotationally coupled with the extending/retracting arm to assist with alignment with an item to be gripped and/or placed.

8. The picking device according to claim 7, further comprising:
a second push-pull mechanism configured to act about the horizontal member to extend/retract the extending/retracting arm along the vertical axis.

9. The picking device of claim 8, wherein the second push-pull mechanism comprises:
a rack and pinion;
a push-pull chain actuator; or
a linear actuator.

10. The picking device of claims 7 to 9, wherein the end-effector comprises:
a rigid outer structure configured to at least partially surround an item; and
an inner member configured to generate a force between the rigid outer structure and the item such that the object can be gripped by the end effector; or
suctions cups; or
jaws.

11. A system comprising:
the picking device according to any preceding claim;
an elevator device configured to raise a pallet for storing a plurality of items; and
a controller configured to:
raise/lower the elevator device such that a top layer of items on the pallet approximately aligns with a level of a destination or origin location;
use the picking device to either grip and remove an item from the top layer of the items on the pallet, or place an item on the top layer of the pallet; and
use the picking device to either place the item that has been removed in the destination location, or obtain another item from the origin location for placement adjacent the item that was placed.

12. The system of claim 11, wherein the controller is further configured to either iteratively remove or place items as part of a respective palletisation or de-palletisation process, wherein the items are removed or placed on a one-by-one layer-by-layer basis.

13. The system of claims 11 or 12, further comprising a vision system, wherein the vision system is configured to determine the location from which an item is to be removed or placed, and wherein the controller is further configured to control the movements of the picking device and elevator device to minimise the time taken to remove the item or place the item, and optionally wherein the location comprises a conveyor, and the controller is further configured to control the conveyor for receiving items that have been removed and/or presenting items to be placed.

14. A method for de-palletising and/or palletising using the system of claims 11 to 13, wherein the method comprises:
using the controller to:
a) raise/lower the elevator device such that the top layer of items on the pallet approximately aligns with the level of a destination or origin location;
b) use the picking device to either grip and remove an item from the top layer of the items on the pallet, or place an item on the top layer of the pallet;
c) use the picking device to either place the item that has been removed in the destination location, or obtain another item from the origin location for placement adjacent the item that was placed; and
d) iteratively carry out steps a) to c) to remove or place items as part of a respective palletisation or de-palletisation process, wherein the items are removed or placed on a one-by-one layer-by-layer basis.

15. A computer program comprising instructions which, when the program is executed by a computer, cause the computer to carry out the method of claim 14.
